# EUROPÄISCHE PATENTSCHRIFT

(11) **EP 0 863 187 B1**
(45) Veröffentlichungstag und Bekanntmachung des Hinweises auf die Patenterteilung: **23.05.2001**
(21) Anmeldenummer: 98102662.8
(22) Anmeldetag: 17.02.1998
(51) Int. Cl.: C09C 1/00, C04B 33/14, C04B 41/86, C08K 3/00, C03C 8/14, C03C 8/18

(54) **Dekorfarbe, Verfahren zu ihrer Herstellung und ihre Verwendung**
Decorative colours, process for their preparation and their use
Couleurs décoratives, leur procédé de préparation et leur utilisation

(30) Priorität: 06.03.1997 DE 19709100
(43) Veröffentlichungstag der Anmeldung: 09.09.1998
(73) Patentinhaber: dmc2 Degussa Metals Catalysts Cerdec AG, 60287 Frankfurt am Main (DE)
(72) Erfinder: Scholz, Mario, Dr., 63584 Gründau-Lieblos (DE); McIntosh, Ralph, 63457 Hanau (DE); Kunz, Günter, 63486 Bruchköbel (DE); Schulz, Andreas, Dr., 63263 Neu-Isenburg (DE); Giesecke, Norbert, 63546 Hammersbach (DE); Wilfert, Jenny, 63456 Hanau (DE); Speer, Dietrich, Dr., 63505 Langenselbold (DE)

(56) Entgegenhaltungen:
- EP-A- 0 675 084
- DE-A- 4 411 104
- DE-C- 3 719 051
- LEHNHÄUSER W ET AL: "Beeinflussung der Glasurfärbung durch Zeolith" KERAMISCHE ZEITSCHRIFT, Bd. 40, Nr. 7, Juli 1988, Seiten 493-497, XP002089333

## Beschreibung

Die Erfindung betrifft eine Dekorfarbe, enthaltend einen Glasfluß und eine farbgebende Komponente, wobei letztere ein mit einem Metall oder einer Verbindung desselben beladenes Molekularsieb ist sowie die Herstellung und Verwendung der Dekorfarbe.

Dekorfarben zur Erzeugung keramischer Dekore bestehen gewöhnlich aus einer farbgebenden Komponente, etwa einem Pigment oder einem Farbkörper oder Vorstufen hierfür, und einem Glasfluß, der die farbgebende Komponente während des Brands auf dem zu dekorierenden Substrat, etwa Glas, Porzellan und Keramik, fixiert.

Bei dem in der DE-A 44 11 104 beschriebenen Verfahren zur Herstellung von Purpurpigmenten wird ein Trägermaterial aus der Reihe von Glasflüssen sowie anderen oxidischen und silikatischen Stoffen oder Gemischen mit einer oder mehreren Goldverbindungen in trockener Form oder in Form einer Lösung oder Suspension im Gewichtsverhältnis Trägermaterial zu Gold von 10 zu 1 bis 2000 zu 1 und gegebenenfalls zusätzlich farbtonmodifizierenden Metallverbindungen in Kontakt gebracht und das Gemisch auf eine Temperatur oberhalb der Zersetzungstemperatur der Goldverbindung(en) und farbtonmodifizierenden Metallverbindungen erwärmt, wobei durch dabei gebildetes kolloidales Gold die Purpurfarbe erzeugt wird. Unter den Trägermaterialien werden außer Glasflüssen auch SiO₂, Al₂O₃, TiO₂, La₂O₃, CeO₂ und Silikate wie Erdalkalimetall-, Zirkonium- und Aluminiumsilikat genannt. Hinweise, wonach die Oxide und Silikate in einer bestimmten strukturellen Form vorliegen müssen, lassen sich diesem Dokument nicht entnehmen. Gemäß DE-A 44 11 103 ist es nicht nötig, die in der DE-A 44 11 104 beschriebene thermische Behandlung vorzunehmen, da die Zersetzung der Goldverbindung und damit die Farbbildung auch beim Dekorbrand abläuft.

An die in Dekorfarben eingesetzten farbgebenden Komponenten, wie Farbpigmente, werden hohe Anforderungen an die Farbstabilität unter Bedingungen des Brandes gestellt. Diese Anforderungen werden insbesondere beim Hochtemperaturschnellbrand - oberhalb 1000 °C bis zu 1400 °C - von vielen Pigmenten unzureichend erfüllt. Beispielsweise führen graue Dekorfarben oft nicht zu einem neutralgrauen Farbton mit a*- und b*-Werten im CIELab-System (DIN 5033, Teil 3) nahe null, sondern zeigen einen deutlichen Farbstich ins bläuliche oder gelbliche. Auch das Herunterverdünnen von schwarzen Pigmenten führt aufgrund eines Anlösens des Pigments und/oder einer Freisetzung von farbverändernden Ionen in die Glasmatrix oft nicht zu neutralgrauen Produkten. Es besteht auch ein Bedarf an magentafarbenen Dekorfarben, welche sich für Hochtemperaturanwendungen eignen, etwa eine Inglasurdekoration bei 1100 bis 1240 °C, weil bisher hierfür eingesetzte Pigmente, so das Cr-dotierte CaSnSiO₅, den Magentafarbton nicht befriedigend treffen und zudem bei/über 1200 °C zum Verblassen neigen.

Aus der EP-B 0 294 664 ist ein Verfahren zu Herstellung von Einschlußpigmenten bekannt, wobei eine in oder/und an einem Zeolithen gebundene farbgebende Substanz oder Vorstufe hierfür mit einer Hüllkomponente oder Vorstufen hierfür bei 500 bis 1200 °C geglüht wird. Als farbgebende Komponente werden Sulfide, Selenide und Sulfoselenide von Cd und Hg sowie Fe-oxid genannt, jedoch wird im einleitenden Stand der Technik auch Goldpurpur als einschließbare Komponente erwähnt. Als Hüllkomponente werden u. a. ZrO₂, SiO₂ und insbesondere ZrSiO₄, nicht aber Glasflüsse genannt.

Das Dokument DE 37 19 051 C1 lehrt Einschlußpigmente, bei deren Herstellung ein mit einer Ausgangskomponente der farbgebenden Substanz beladenes Molekularsieb mit Hüllkomponenten gemischt und kalziniert wird. Bei den Hüllkomponenten handelt es sich um Substanzen, welche dem Angriff von Glasflüssen widerstehen.

Die unmittelbare Verwendung von goldhaltigen Zeolithen in Glasfritte enthaltenden Dekorfarben wird nicht nahegelegt, weil sich die beiden Dokumente auf Einschlußpigmente richten, die nicht mit Glasflüssen reagieren.

Das bei der Herstellung purpurfarbener Dekore gemäß EP 0 675 084 A2 zu verwendende Mittel enthält eine zersetzliche Goldverbindung und einen Glasfluss. Dem Dokument lässt sich nicht entnehmen, die Goldverbindung zunächst an ein Molekularsieb zu binden. Magentafarbene Pigmente auf der Basis von kolloidalem Gold oder Vorstufen hierfür auf einem anorganischen Trägermaterial mit verbesserter Hochtemperaturstabilität der daraus erhältlichen Dekorfarben sind in der noch nicht veröffentlichten DE-Patentanmeldung 196 49 067.7 beschrieben. Das Verfahren umfaßt eine Copräzipitation einer unlöslichen Goldverbindung mit einem Oxidhydrat in Gegenwart eines Trägermaterials, etwa einer Glasfritte oder eines Oxids oder Silikats.

Aufgabe der Erfindung ist die Bereitstellung von Dekorfarben mit verbesserter Hochtemperaturstabilität, insbesondere neutralgraue und magentafarbene Dekorfarben.

Gefunden wurde eine Dekorfarbe, enthaltend einen Glasfluß und eine farbgebende Komponente, welche dadurch gekennzeichnet ist, daß sie als farbgebende Komponente ein mit mindestens einem Metall aus der Reihe V, Cr, Mn, Fe, Co, Ni, Cu, Zn, Ag, Au, Ru, Rh, Pd, Os, Ir, Pt und/oder einer Verbindung des Metalls beladenes Molekularsieb enthält.

Die Unteransprüche richten sich auf bevorzugte Ausführungsformen der Dekorfarbe.

Kennzeichen der Dekorfarbe ist, daß das für die Farbe verantwortliche kolloidale Metall oder/und Metallverbindung beziehungsweise die für die Farbbildung während des Dekorbrandes verantwortliche Metallverbindung an/in einem Molekularsieb fixiert ist. Die Beladung des Molekularsiebes kann unter Einsatz einer ionischen Metallverbindung mittels Ionenaustausch oder unter Einsatz einer nichtionischen Metallverbindung oder eines kolloidalen Metalls durch Adsorption in der Struktur des Molekularsiebs erfolgt sein. Ein zunächst mit einer Metallverbindung beladenes Molekularsieb kann auch mittels eines nachgeschalteten Kalzinierungsschritts derart umgewandelt worden ein, daß die Metallverbindung infolge thermischer Zersetzung, welche auch mit einer Reduktion mit Wasserstoff kombiniert sein kann, in Form kolloidalen Metalls oder gegebenenfalls auch in Form eines Metalloxids oder einer anderen thermisch stabilen Metallverbindung überführt worden sein. Kolloidales Metall, insbesondere kolloidales Gold und Goldcluster, welche jeweils ligandenstabilisiert sein können, können unmittelbar in Form einer Lösung bei der Herstellung der farbgebenden Komponente eingesetzt worden sein.

Unter den Metallen und Verbindungen derselben werden Edelmetalle und Kupfer als Bestandteil der farbgebenden Komponenten der Dekorfarbe bevorzugt. Besonders bevorzugt enthalten die Dekorfarben Gold, Silber, Palladium und Platin. Verbindungen von V, Cr, Mn, Fe, Co, Ni und Cu können aber ebenso wie Ru, Rh, Os und Ir zur Modifizierung des Farbtons enthalten sein.

Sofern die Aufnahmekapazität der Molekularsiebe für die Metallverbindung oder das Metallkolloid ausreicht, können bezüglich der Zusammensetzung und der Struktur unterschiedliche Molekularsiebe bei der Herstellung der färbenden Komponente eingesetzt worden sein.

Bevorzugte Molekularsiebe für die farbgebende Komponente sind ausgewählt aus der Reihe Alumosilikate, insbesondere Alumosilikaten mit einem SiO₂/Al₂O₃-Modul von 10 bis 100, wie zum Beispiel ZSM-5 mit einem Modul um 28 oder Zeolith Beta mit einem Modul um 27 oder Mordenit mit einem Modul um 30, aluminiumarme bis -freie Silikalite mit einem Modul von größer 100, titanhaltige Silikalite, wie TS-1, TS-2 oder Ti-Beta-Zeolith, Ferrosilikate, in denen die Gerüstaluminiumatome ganz oder teilweise durch Eisenatome ersetzt wurden, und mesoporöse Silikate, wie MCM-41 beziehungsweise fremdatomhaltige mesoporöse Silikate, wie zum Beispiel Al-MCM-41.

Üblicherweise ist das Molekularsieb mit 0,01 bis 20 Gew.-% Metall oder Metallverbindung beladen, jeweils berechnet als Metall. Besonders bevorzugt enthält das Molekularsieb 0,5 bis 5 Gew.-% Metall oder Metallverbindung, berechnet als Metall. Magentafarbene Dekorfarben enthalten in der farbgebenden Komponente Gold, neutralgraue Dekorfarben Palladium.

Der Glasfluß der Dekorfarbe kann beliebig zusammengesetzt sein und liegt üblicherweise als feinverteilte Glasfritte vor. Die Zusammensetzung wird der Fachmann aus dem breiten Angebot des Marktes auswählen und vorzugsweise eine solche wählen, welche bezüglich des zu dekorierenden Substrats und der Temperatur des Brandes angepaßt ist, so daß es zu keinen Dekorfehlern, etwa wegen zu unterschiedlicher Ausdehnungskoeffizienten des Glasflusses und des Substrats, kommt.

Das Gewichtsverhältnis von Glasfluß zu farbgebender Komponente liegt bei erfindungsgemäßen Dekorfarben im allgemeinen im Bereich zwischen 20 und 0,2 , vorzugsweise im Bereich zwischen 10 und 1. Das genaue Verhältnis richtet sich nach der Farbintensität der farbgebenden Komponente und der gewünschten Farbintensität des damit herzustellenden Dekors.

Die Dekorfarbe kann selbst bereits die ausgebildete Farbe aufweisen oder, wie bereits zuvor angedeutet, im wesentlichen farblos oder schwach gefärbt sein. Letzteres ist dann der Fall, wenn die in der Struktur des Molekularsiebes fixierten Metallverbindungen während des Brands zur Farbbildung, etwa Bildung eines Edelmetallkolloids, befähigt sind.

Dekorfarben werden in flüssiger Form oder pastenförmig appliziert, etwa mittels üblicher Mal- und Drucktechniken, einschließlich der Abziehbildtechnik. Demgemäß können die Dekorfarben zusätzlich ein flüssiges Medium enthalten. Derartige Medien, etwa Druckmedien, enthalten als Hauptkomponenten im allgemeinen ein oder mehrere organische Bindemittel und ein oder mehrere Lösungsmittel, darunter Wasser sowie übliche wasserlösliche und wasserunlösliche organische Lösungsmittel. Unter den Bindemitteln sind Homo- und Copolymere sowie Gemische davon verwendbar. Ausgewählte Bindemittel sind Homopolymere, Copolymere und Blockpolymere auf der Basis von Polyacrylat- und Polymethacrylatharzen, Polyvinylpyrrolidon (PVP), Celluloseethern, Polyamiden, Polyethylenglykol, Polyestern, Polyacrylamiden, Polyvinylacetat, Polyvinylalkohol, Polyurethanharzen, Alkydharzen und Polyaminen sowie Gemischen davon. Die Harze können, insbesondere wenn sie in wäßrigen Systemen eingesetzt werden, löslichmachende Gruppen, wie Carboxylat-, Sulfonat-, Hydroxy- und/oder Amino- oder Ammoniumgruppen enthalten. Für wäßrige Systeme werden PVP, Polymethacrylate und Celluloseether besonders bevorzugt.

Die in den erfindungsgemäßen Dekorfarben enthaltene farbgebende Komponente kann auch ohne den Glasfluß als Farbpigment, beispielsweise zum Einfärben von Kunststoffen, Fasern, Folien und Lacken, verwendet werden. Bevorzugte Farbpigmente sind solche, welche mindestens ein Edelmetall, insbesondere Gold oder Palladium, in kolloidaler Form in einem Molekularsieb aus der Reihe der Alumosilikate, insbesondere jenen mit einem SiO₂/Al₂O₃-Modul von größer 10, Silikalite, Titansilikalite, Ferrosilikate und mesoporöse Silikate enthalten. Farbpigmente auf der Basis von kolloidalem Gold oder kolloidalem Gold und Silber und Titansilikalit sind in der noch nicht veröffentlichten DE-Patentanmeldung (internes Aktenzeichen 960116 MS) beschrieben.

Ein weiterer Gegenstand der Erfindung ist ein Verfahren zur Herstellung der Dekorfarben, das die Schritte umfaßt:
(i) Imprägnieren eines Molekularsiebs mit einer Lösung oder Dispersion einer Metallverbindung oder Kolloid des Metalls oder einer flüssigen Metallverbindung eines oder mehrerer Metalle aus der Reihe V, Cr, Mn, Fe, Co, Ni, Cu, Zn, Ag, Au, Ru, Rh, Pd, Os, Ir und Pt,
(ii) soweit ein Lösungsmittel anwesend ist, Trocknen oder Trocknen und Kalzinieren des beladenen Molekularsiebs und
(iii) inniges Homogenisieren des beladenen und gegebenenfalls kalzinierten Molekularsiebs mit einem Glasfluß.

Besonders bevorzugt wird die Metallverbindung in Form einer Lösung eingesetzt. Unter den Goldverbindungen können ionische Goldverbindungen, wie Tetrachlorogoldsäuretetrahydrat, Natriumdisulfitoaurat(III), Natriumdithiosulfatoaurat(III), Kaliumdicyanoaurat(I), als auch nicht-ionische Goldverbindungen, wie Gold(I)thiolate und Goldsulforesinate eingesetzt werden. Gemäß einer Alternative wird unmittelbar eine Lösung kolloidalen Golds oder eines Goldclusters eingesetzt, wobei das Kolloid und der Cluster auch ligandenstabilisiert sein können, etwa mittels eines Phosphans. Andere Edelmetalle werden im allgemeinen in Form einer ionischen Verbindung, welche neutrale Komplexe vom Typ [Me(NH₃)₄] (HCO₃)₂ und [MeCl₂] (NH₃)₂ sowie anionische Komplexe vom Typ [MeCl₄] (NH₄)₂ mit Me gleich Pt oder Pd einschließt, eingesetzt.

Sofern die ungefärbte Metallverbindung in ein gefärbtes kolloides Metall oder eine anderweitig gefärbte Verbindung überführt werden soll, schließt sich an die Stufe (i) oder, sofern notwendig, die Stufe (ii) ein Kalzinierschritt bei einer Temperatur im Bereich oberhalb 100 bis 600 °C, meistens 200 bis 550 °C, an.

Das Kontaktieren der farbgebenden Komponente mit dem Glasfluß wird unter Verwendung von intensiv wirkenden Mischvorrichtungen, etwa einer Mühle, bewerkstelligt. Bei diesem Schritt können flüssige Mahlhilfsmittel zugegen sein. Die homogene Dekorfarbe kann in an sich bekannter Weise zusätzlich in eine Paste überführt werden.

Die erfindungsgemäßen Dekorfarben eignen sich zur Erzeugung keramischer Dekore, können aber auch zum Einfärben von Kunststoffen und Lacken verwendet werden. Die Dekorfarben zeichnen sich durch eine unerwartet gute Farbstabilität bei einem Brand bei hohen Temperaturen aus. Sowohl die magentafarbenen Dekorfarben als auch grauen Dekorfarben weisen nach dem Brand die geforderten Werte für a^{*} und b^{*} auf.

Die Beispiele verdeutlichen die Erfindung. Die Beispiele 1 bis 10 richten sich auf das Beladen des Molekularsiebs mit einer Metallverbindung. Die Beispiele 11 bis 15 betreffen die Herstellung der Dekorfarbe und deren Verwendung.

### Beispiel 1

### Synthese von Au-TS-1 (Gold-Titansilikalit-1) mit einem Goldgehalt von 0,654 Gew.-%

Ein Zeolith vom Typ TS-1 wird durch Imprägnierung mit einem wasserlöslichen Au(I)-thiolat (25,17 Gew.-% Au) mit Gold beladen. Dabei werden zunächst 0,523 g des Goldthiolats bei 50 °C in 150 ml destilliertem Wasser gelöst, wobei eine hellgelbe Lösung entsteht. Anschließend werden bei dieser Temperatur 20 g TS-1 in die vorbereitete Lösung eingetragen und 2 h gerührt. Die erhaltene Suspension wird mit einem Laborsprühtrockner getrocknet. Das leicht gelbfarbene Pulver wird dann 12 h bei 550 °C unter Luft kalziniert. Man erhält ein rotviolettes Pulver mit einem Goldgehalt von 0,654 Gew.-%.

### Beispiel 2

### Synthese von Au-TS-1 (Gold-Titansilikalit-1) mit einem Goldgehalt von 4,762 Gew.-%

Analog Beispiel 1 wird unter Verwendung eines wasserlöslichen Au-thiolats (30,06 Gew.-% Au) ein Silikalit vom Typ TS-1 mit Gold beladen. Das nach dem Trocknen leicht gelbfarbene Pulver wird dann 12 h bei 550 °C unter Luft kalziniert. Man erhält ein tief rotviolettes Pulver mit einem Goldgehalt von 4,762 Gew.-%.

### Beispiel 3

### Synthese von Au-TS-1 (Gold-Titansilikalit-1) mit einem Goldgehalt von 19,650 Gew.-%

Analog Beispiel 1 wird ein Silikalit vom Typ TS-1 (20 g) mit 16,264 g wasserlöslichem Au-thiolat (30,06 Gew.-% Au) imprägniert. Das bei der Sprühtrocknung der Suspension erhaltene gelbfarbene Pulver wird 12 h bei 550 °C unter Luft kalziniert. Man erhält ein rotviolettes Pulver mit einem Goldgehalt von 19,650 Gew.-%.

### Beispiel 4

### Synthese von Au-ZSM-5 mit einem Goldgehalt von 4,762 Gew.-%

Gold wird in einen Zeolith vom Typ ZSM-5 (SiO₂/Al₂O₃ = 28) durch Festkörperionenaustausch eingebracht. Dabei werden zunächst 20 g ZSM-5 in einer Kugelmühle mit 2,299 g Goldester (43,5 Gew.-% Au) gemischt und 1 h lang gemahlen. Das erhaltene Pulver wird anschließend 12 h bei 550 °C unter Luft kalziniert. Nach der Kalzinierung erhält man ein rotes Pulver mit einem Goldgehalt von 4,762 Gew.-%.

### Beispiel 5

### Synthese von (Au/Ag)-ZSM-5 mit einem Goldgehalt von 4,762 Gew.-% und einem Silbergehalt von 0,95 Gew.-%

Gold und Silber werden auf einen Zeolith vom Typ ZSM-5 durch eine Kombination von Ionenaustausch und Imprägnierung aufgebracht. Dabei werden zunächst 0,31 g Silberacetat bei 50 °C in 200 ml destilliertem Wasser gelöst. Anschließend werden bei dieser Temperatur 20 g ZSM-5 in die Lösung eingetragen und 2 h gerührt. Die erhaltene farblose Suspension wird mit einem Laborsprühtrockner getrocknet. Das farblose Pulver wird dann 12 h bei 650 °C unter Luft kalziniert. 16,3 g des farblosen Pulvers (Ag-ZSM-5) werden in 150 ml destilliertem Wasser bei 50 °C suspendiert und mit 2,71 g Goldthiolat (30,06 Gew.-% Gold) versetzt. Die gelbfarbene Suspension wird mit einem Laborsprühtrockner getrocknet und anschließend 12 h bei 550 °C kalziniert. Man erhält ein rotes Pulver mit einem Goldgehalt von 4,762 Gew.-%.

### Beispiel 6

### Synthese von Au-MCM-41 (M41S) mit einem Goldgehalt von 0,654 Gew.-%

Gold wird auf einen mesoporösen Silikalit vom Typ MCM-41 durch eine Imprägnierung mit einem H₂O-löslichen Au-thiolat (25,17 Gew.-% Au) aufgebracht. Dabei werden zunächst 0,523 g des Goldthiolats bei 50 °C in 150 ml destilliertem Wasser gelöst, wobei eine hellgelbe Lösung entsteht. Anschließend werden bei dieser Temperatur 20 g MCM-41 in die vorbereitete Lösung eingetragen und 2 h gerührt. Die erhaltene Suspension wird mit einem Laborsprühtrockner getrocknet. Das leicht gelbfarbene Pulver wird dann 12 h bei 550 °C unter Luft kalziniert. Man erhält ein rosafarbenes Pulver mit einem Goldgehalt von 0,654 Gew.-%.

### Beispiel 7

### Synthese von Cu-ZSM-5 mit einem Cu-Gehalt von 2,00 Gew.-%

Kupfer wird unter Einsatz von Kupfersulfat durch Ionenaustausch in einen Zeolith vom Typ ZSM-5 eingebracht. Dabei werden in eine Lösung von 68,7 g CuSO₄ ^{·} 5 H₂O in 550 ml destilliertem Wasser 110 g Zeolith vom Typ ZSM-5 eingerührt und auf 80 °C erhitzt. Die Suspension wird 1 h bei dieser Temperatur gehalten und anschließend filtriert. Man wäscht den Filterkuchen mit destilliertem Wasser, bis im Filtrat kein Sulfat mehr nachweisbar ist. Der Filterkuchen wird 12 h bei 120 °C getrocknet. Man erhält ein hellblaues Pulver mit einem Kupfergehalt von 2,00 Gew.-%.

### Beispiel 8

### Synthese von Pt-ZSM-5 mit einem Pt-Gehalt von 5,00 Gew.-%

Platin wird unter Einsatz von [Pt(NH₃)₄] (HCO₃)₂ durch Ionenaustausch in einen Zeolith vom Typ ZSM-5 eingebracht. Dabei werden in eine Lösung von 1,04 g [Pt(NH₃)₄] (HCO₃)₂ (50,48 % Pt) in 150 ml Wasser 10,54 g ZSM-5 eingerüht und 2 h auf 80 °C gehalten. Der Feststoff wird abfiltriert, mit destilliertem Wasser gewaschen und bei 120 °C getrocknet (= Produkt 8a). Bei 400 °C wird im Wasserstoffstrom reduziert, wobei man ein graues Pulver (= Produkt 8b) mit einem Pt-Gehalt von 5,00 Gew.-% erhält.

### Beispiel 9

### Synthese von Pd-ZSM-5 mit einem Pd-Gehalt von 5,00 Gew.-%

Palladium wird unter Einsatz von [Pd(NH₃)₄] (HCO₃)₂ durch Ionenaustausch auf einen Zeolith vom Typ ZSM-5 eingebracht. Dabei werden in eine Lösung von 1,04 g [Pd(NH₃)₄] (HCO₃)₂ (36,23 % Pd) in 150 ml Wasser 10,54 g ZSM-5 eingerührt und 2 h auf 80 °C gehalten. Der Feststoff wird abfiltriert und mit destilliertem Wasser gewaschen und bei 120 °C getocknet (= Produkt 9a). Bei 400 °C wird im Wasserstoffstrom reduziert; man erhält ein graues Pulver mit einem Pd-Gehalt von 5,00 Gew.-% (= Produkt 9b).

### Beispiel 10

### Synthese von Au-Beta mit einem Au-Gehalt von 4,762 Gew.-% Au

Gold wird auf einen Zeolith vom Typ Beta durch eine Imprägnierung mit einem H₂O-löslichen Au(I)-thiolat (24,78 Gew.-% Au) aufgebracht. Dabei werden zunächst 4,056 g des Goldthiolats bei 50 °C in 200 ml destilliertem Wasser gelöst, wobei eine gelbe Lösung entsteht. Anschließend werden bei dieser Temperatur 20,1 g Beta in die vorbereitete Lösung eingetragen und 2 h gerührt. Die erhaltene Suspension wird mit einem Laborsprühtrockner getrocknet. Das gelbfarbene Pulver wird dann 12 h bei 550 °C unter Luft kalziniert. Man erhält ein rotviolettes Pulver mit einem Goldgehalt von 4,762 Gew.-%.

### Allgemeine Vorschrift zur Durchführung des Schritts (iii) sowie der Anwendung der Dekorfarbe

### (Beispiele 11 bis 15 und Vergleichsbeispiele):

Eine wie zuvor hergestellte farbgebende Komponente wurde im Verhältnis 3 : 7 mit einem Glasfluß (10136 der Cerdec AG) in einer IKA-Mühle 1 min. homogenisiert. Als Mahlmedium dienten 35 ml Spiritus; die Feststoffmenge betrug jeweils insgesamt 50 g. Die Anpastung der Dekorfarbe erfolgte unter Einsatz eines Druckmediums (Nr. 801015 der Fa. Cerdec AG) durch Dispergierung auf einer Dreiwalze.

Gedruckt wurde die Farbe mit einem 100er Nylonsieb auf Meta-Papier SB 345; überfilmt wurde mit einer Filmlösung (Nr. 80894 der Fa. Cerdec AG).

Die Abziehbilder (ca. 5 x 5 cm) werden auf Porzellanplättchen aufgetragen und bei 1220 °C in einem gasbeheizten Rollenofen bei einer Schubzeit von 90 min. gebrannt. Die Farbwerte wurden mit einem ER50 der Fa. KOLLMORGEN ermittelt und auf CIELAB umgerechnet:

### Beispiel 11

a) Unter Einsatz des goldhaltigen Titansilikalits des Beispiels 2 betrugen die Farbwerte des magentafarbenen Dekors: L* = 65,6; a* = 17,2; b* = -0,9.
b) Vergleichsbeispiel: Eine in gleicher Weise mit dem Farbpigment 27404 (Fa. Cerdec AG) (CaSnSiO₅ dotiert mit Chrom) hergestellte Farbe ergibt die Werte: L* = 66; a* = 17,5; b^{*} = 4,4. Es fehlt der den Magentafarbton kennzeichnende Blauanteil; im Vergleichsbeispiel wird ein eher gelbliches Produkt (deutlich positiver b-Wert) erhalten.

### Beispiel 12

Unter Einsatz des Produkts des Beispiels 10 auf der Basis Gold und Zeolith Beta wird ein gegenüber Beispiel 11 a intensiveres magentafarbenes Dekor erhalten: L^{*} = 60; a^{*} = 19,5, b^{*} = -0,9 erhalten.

### Beispiel 13

Unter Einsatz der farbgebenden Komponente des Beispiels 4 auf Basis Au mit einem Zeolith vom Typ ZSM-5 wird ein intensives magentafarbenes Dekor mit L* = 51,2; a* = 24,8; b* = -2,1 erhalten.

### Beispiel 14 und Vergleichsbeispiele hierzu

a) Unter Einsatz des Produktes des Beispiels 9a wurde ein nahezu neutralgraues Dekor mit L* = 55,3; a* = 0,6; b* = 4,2 erhalten.
b) Das Produkt des Beispiels 9b, also nach Reduktion im Wasserstoffstrom, führte zu den Farbwerten L* = 63,6; a* = 0,35; b* = 2,67.
c) Vergleichsbeispiele: Die bisher eingesetzten Grau-Farbpigmente (25052 und 25145 der Fa. Cerdec AG) ergeben die Farbwerte L* = 71,9; a* = -2,6; b* = -6,6 beziehungsweise L* = 63,2; a* = 2,1; b* = 5,5.

Während die erfindungsgemäßen Beispiele 14 a und 14 b mit a^{*}- und b^{*}-Werten nahe null fast neutralgrau sind, weisen die Produkte der Vergleichsbeispiele wesentlich höhere Buntheitswerte auf: 25052 ergibt ein taubengraues, 25145 ein bräunlichgraues Produkt.

### Beispiel 15 und Vergleichsbeispiel hierzu

Erfindungsgemäße Dekorfarben mit unterschiedlichem Glasfluß (B 15 a und B 15 b) sowie vorbekannte Dekorfarben (VB 15 a und VB 15 b), hergestellt gemäß dem in der DE-A 44 11 104 beschriebenen Verfahren unter Einsatz von HAuCl₄ und Ammoniak, wurden unter gleichen Bedingungen auf Porzellan mittels üblicher Abziehbildtechnik aufgebracht und eingebrannt. Der Goldgehalt der Dekorfarbe betrug in B 15 a und B 15 b 1,4 Gew.-%, derjenige von VB 15 a und VB 15 b 1,0 Gew.-% Au.

Gedruckt wurde unter Einsatz des Siebdruckmediums 80820 der Fa. Cerdec AG, bei einem Gewichtsverhältnis Farbe/Medium = 1:1 mit einem Drucksieb 100 T; überfilmt wurde mit der Filmlösung 80450 der Fa. Cerdec AG. Brennbedingungen in einem elektrisch beheizten Kammerofen: Aufheizrate 41 K/min., Endtemperatur 1220 °C, Haltezeit 1 min.

Farbwerte unter Einsatz des Flusses 10141 (Fa. Cerdec AG) :

| Dekorfarbe | L* = | a* = | b* = | C* = | h* = |
|---|---|---|---|---|---|
| B 15 a | 75,14 | 8,49 | 2,7 | 8,91 | 17,64 |
| VB 15 a | 86,57 | -0,4 | 1,95 | 1,95 | 91,18 |

Versuche mit Fluss 10136 (Fa. Cerdec AG) :

| Farbe/Vergleich | L* = | a* = | b* = | C* = | h* = |
|---|---|---|---|---|---|
| B 15 b | 65,81 | 16,95 | 1,75 | 17,04 | 5,89 |
| VB 15 b | 73,00 | 10,14 | 2,60 | 10,47 | 14,38 |

Anhand der Brennproben und den darauf gemessenen Farbwerten nach CIELAB erkennt man, daß die erfindungsgemäßen Dekorfarben den Farben, die nach dem vorbekannten Verfahren hergestellt wurden, bezüglich ihrer Temperaturstabilität deutlich überlegen sind.

## Patentansprüche

1. Dekorfarbe, enthaltend einen Glasfluß und eine farbgebende Komponente,
dadurch gekennzeichnet,
daß sie als farbgebende Komponente ein mit mindestens einem Metall aus der Reihe V, Cr, Mn, Fe, Co, Ni, Cu, Zn, Ag, Au, Ru, Rh, Pd, Os, Ir, Pt und/oder einer Verbindung des Metalls beladenes Molekularsieb enthält.

2. Dekorfarbe nach Anspruch 1,
dadurch gekennzeichnet,
daß das Molekularsieb ausgewählt ist aus der Reihe der Zeolithe auf Alumosilikatbasis, Silikalite, Titansilikalite, Ferrosilikate und mesoporösen Silikate.

3. Dekorfarbe nach Anspruch 1 oder 2,
dadurch gekennzeichnet,
daß das Molekularsieb mit einem oder mehreren der Metalle aus der Reihe der Edelmetalle und Kupfer oder/und einer Verbindung dieser Metalle beladen ist.

4. Dekorfarbe nach einem der Ansprüche 1 bis 3,
dadurch gekennzeichnet,
daß das Molekularsieb mit 0,01 bis 20 Gew.-%, berechnet als Metall, der Metalle oder Metallverbindungen beladen ist.

5. Dekorfarbe nach einem der Ansprüche 1 bis 4,
dadurch gekennzeichnet,
daß es ein mit kolloidalem Gold oder einer Goldverbindung beladenes Molekularsieb aus der Reihe der Alumosilikat-Zeolithe, Silikalite, Titansilikalite, Ferrosilikate und mesoporösen Silikate enthält und zusätzlich ein farbtonmodifizierendes Metall oder eine Verbindung desselben in einer Menge, berechnet als Metall, unterhalb des Goldgehalts enthalten kann.

6. Dekorfarbe nach einem der Ansprüche 1 bis 5,
dadurch gekennzeichnet,
daß das Gewichtsverhältnis Glasfluß zu beladenem Molekularsieb zwischen 10 und 1 liegt.

7. Dekorfarbe nach einem der Ansprüche 1 bis 6,
dadurch gekennzeichnet,
daß sie zusätzlich ein organisches Bindemittel und Lösungsmittel enthaltendes flüssiges Medium enthält.

8. Verfahren zur Herstellung einer Dekorfarbe gemäß einem der Ansprüche 1 bis 7,
umfassend (i) Imprägnieren eines Molekularsiebs mit einer Lösung oder Dispersion einer Metallverbindung oder Kolloid des Metalls oder einer flüssigen Metallverbindung eines oder mehrerer Metalle aus der Reihe V, Cr, Mn, Fe, Co, Ni, Cu, Zn, Ag, Au, Ru, Rh, Pd, Os, Ir und Pt,
dadurch gekennzeichnet,
daß man (ii) das beladene Molekularsieb, soweit ein Lösungsmittel anwesend ist, trocknet oder trocknet und kalziniert und (iii) das beladene und gegebenenfalls kalzinierte Molekularsieb mit einem Glasfluß innig homogenisiert.

9. Verfahren nach Anspruch 8,
dadurch gekennzeichnet,
daß man zum Imprägnieren eine Lösung einer Edelmetallverbindung oder eines Edelmetallkolloids oder eine flüssige Edelmetallverbindung einsetzt.

10. Verwendung der Dekorfarbe gemäß Anspruch 1 zur Erzeugung keramischer Dekore, insbesondere im Hochtemperaturschnellbrand eingebrannter keramischer Dekore, und zum Einfärben von Kunststoffen.

## Claims

1. Decorative colorant, comprising a glass flux and a chromophoric component,
characterised in that
it contains as the chromophoric component a molecular sieve loaded with at least one metal from the series V, Cr, Mn, Fe, Co, Ni, Cu, Zn, Ag, Au, Ru, Rh, Pd, Os, Ir, Pt and/or a compound of the metal.

2. Decorative colorant according to claim 1,
characterised in that
the molecular sieve is selected from the series comprising aluminosilicate-based zeolites, silicalites, titanium silicalites, ferrosilicates and mesoporous silicates.

3. Decorative colorant according to claim 1 or claim 2,
characterised in that
the molecular sieve is loaded with one or more metals from the series comprising noble metals and copper and/or a compound of these metals.

4. Decorative colorant according to one of claims 1 to 3,
characterised in that
the molecular sieve is loaded with 0.01 to 20 wt.%, calculated as metal, of the metals or metal compounds.

5. Decorative colorant according to one of claims 1 to 4,
characterised in that
it contains a molecular sieve, loaded with colloidal gold or a gold compound, from the series comprising aluminosilicate zeolites, silicalites, titanium silicalites, ferrosilicates and mesoporous silicates and may additionally contain a colour tone-modifying metal or a compound thereof in an amount, calculated as metal, below the gold content.

6. Decorative colorant according to one of claims 1 to 5,
characterised in that
the weight ratio of glass flux to loaded molecular sieve is between 10 and 1.

7. Decorative colorant according to one of claims 1 to 6,
characterised in that
it additionally contains a liquid medium containing organic binder and solvent.

8. Process for producing a decorative colorant according to one of claims 1 to 7,
comprising (i) impregnation of a molecular sieve with a solution or dispersion of a metal compound or colloid of the metal or a liquid metal compound of one or more metals from the series V, Cr, Mn, Fe, Co, Ni, Cu, Zn, Ag, Au, Ru, Rh, Pd, Os, Ir and Pt,
characterised in that
(ii) the loaded molecular sieve, insofar as a solvent is present, is dried or dried and calcined and (iii) the loaded and optionally calcined molecular sieve is intimately homogenised with a glass flux.

9. Process according to claim 8,
characterised in that,
a solution of a noble metal compound or a noble metal colloid or a liquid noble metal compound is used for impregnation.

10. Use of the decorative colorant according to claim 1 to produce ceramic decorations, in particular ceramic decorations stoved by rapid high-temperature firing, and for colouring plastics.

## Revendications

1. Couleur décorative contenant un fluor minéral et un composant colorant
caractérisée en ce qu'
elle contient comme composant colorant un tamis moléculaire chargé avec au moins un métal de la série V, Cr, Mn, Fe, Co, Ni, Cu, Zn, Ag, Au, Ru, Rh, Pd, Os, Ir, Pt et/ou un composé du métal.

2. Couleur décorative selon la revendication 1,
caractérisée en ce que
le tamis moléculaire est choisi dans la série des zéolithes à base d'aluminosilicate, des silicalites, des silicalites de titane, des ferrosilicates et des silicates mésoporeux.

3. Couleur décorative selon l'une quelconque des revendications 1 ou 2,
caractérisée en ce que
le tamis moléculaire est chargé avec un ou plusieurs des métaux de la série des métaux nobles et du cuivre et/ou un composé de ces métaux.

4. Couleur décorative selon l'une quelconque des revendications 1 à 3,
caractérisée en ce que
le tamis moléculaire est chargé avec de 0,01 à 20 % en poids, calculé en métal, des métaux ou des composés métalliques.

5. Couleur décorative selon l'une quelconque des revendications 1 à 4,
caractérisée en ce qu'
elle contient un tamis moléculaire chargé avec de l'or colloïdal ou un composé d'or, et appartenant à la série des zéolithes d'aluminosilicate, des silicalites, des silicalites de titane, des ferrosilicates et des silicates mésoporeux, et elle peut contenir en outre un métal modificateur de couleur ou un composé de ce métal en une quantité, calculée en métal, inférieure à la teneur en or.

6. Couleur décorative selon l'une quelconque des revendications 1 à 5,
caractérisée en ce que
le rapport pondéral du fluor minéral au tamis moléculaire chargé est compris entre 10 et 1.

7. Couleur décorative selon l'une quelconque des revendications 1 à 6,
caractérisée en ce qu'
elle contient en outre un liant organique et un milieu liquide contenant un solvant.

8. Procédé de production d'une couleur décorative selon l'une quelconque des revendications 1 à 7,
comprenant (i) l'imprégnation d'un tamis moléculaire avec une solution ou dispersion d'un composé métallique ou colloïde du métal ou d'un composé métallique liquide d'un ou plusieurs métaux de la série V, Cr, Mn, Fe, Co, Ni, Cu, Zn, Ag, Au, Ru, Rh, Pd, Os, Ir, Pt,
caractérisé en ce que
(ii) on sèche, ou on sèche et on calcine, le tamis moléculaire chargé, dans la mesure où un solvant est présent, et
(iii) on homogénéise intimement avec un fluor minéral le tamis moléculaire chargé et éventuellement calciné.

9. Procédé selon la revendication 8,
caractérisé en ce que
pour l'imprégnation on utilise une solution d'un composé de métal noble ou d'un colloïde de métal noble, ou encore un composé de métal noble liquide.

10. Utilisation de la couleur décorative selon la revendication 1 pour la production de décors céramiques en particulier dans des décors céramiques cuits rapidement à haute température, et pour la coloration de matières plastiques.
